(19) **Europäisches Patentamt**

**European Patent Office**

**Office européen des brevets**

(11) **EP 1 415 128 B1**

(12) **EUROPÄISCHE PATENTSCHRIFT**

(45) Veröffentlichungstag und Bekanntmachung des Hinweises auf die Patenterteilung:
**24.05.2006 Patentblatt 2006/21**

(21) Anmeldenummer: **02754482.4**

(22) Anmeldetag: **01.08.2002**

(51) Int Cl.:
**G01C 21/36** (2006.01)

(86) Internationale Anmeldenummer:
**PCT/DE2002/002844**

(87) Internationale Veröffentlichungsnummer:
**WO 2003/017226 (27.02.2003 Gazette 2003/09)**

(54) **VERFAHREN UND VORRICHTUNG ZUR DARSTELLUNG VON FAHRHINWEISEN IN AUTO-NAVIGATIONSSYSTEMEN**

METHOD AND DEVICE FOR DISPLAYING DRIVING INSTRUCTIONS, ESPECIALLY IN CAR NAVIGATION SYSTEMS

PROCEDE ET DISPOSITIF POUR REPRESENTER DES INDICATIONS DE CONDUITE, EN PARTICULIER DANS DES SYSTEMES DE NAVIGATION POUR VEHICULES AUTOMOBILES

(84) Benannte Vertragsstaaten:
**DE FR GB IT**

(30) Priorität: **07.08.2001 DE 10138719**

(43) Veröffentlichungstag der Anmeldung:
**06.05.2004 Patentblatt 2004/19**

(73) Patentinhaber: **SIEMENS AKTIENGESELLSCHAFT**
**80333 München (DE)**

(72) Erfinder:
• **KOLB, Dieter**
**82110 Germering (DE)**
• **HÖRTNER, Horst**
**A-4115 Kleinzell (AT)**
• **POMBERGER, Gustav**
**A-4040 Linz (AT)**

(56) Entgegenhaltungen:
**EP-A- 0 406 946       EP-A- 1 024 467**
**EP-A- 1 037 188       WO-A-99/54848**
**US-A- 5 621 457**

EP 1 415 128 B1

**Beschreibung**

Die Erfindung betrifft ein Verfahren und eine Vorrichtung bei dem/der abhängig vom aktuellen Standort und von einem festgelegten Fahrziel Fahrhinweise in einem Bild der Fahrzeugumgebung angezeigt werden.

Nach der Patentschrift EP 0 406 946 B1 ist ein solches Verfahren und eine solche Vorrichtung bekannt. Hierbei treten jedoch Probleme bei der Anpassung der Fahrhinweise an das Bild der Fahrzeugumgebung auf.

Aus der Druckschrift WO 99/54848 ist ein Verfahren zur 3-dimensionalen Darstellung von Straßenkreuzungen für Fahrzeugnavigationssysteme gezeigt, bei dem der Betrachtungswinkel in Abhängigkeit der Komplexität der Straßenkreuzung bzw. der Straßenführung gewählt wird, wobei durch eine Vergrößerung des Betrachtungswinkels mehr Raum in der Darstellung zwischen den Straßen entsteht, wodurch die Verständlichkeit erhöht wird.

Aus der Druckschrift US 5,621,457 ist schließlich eine Blickrichtungsdetektionseinrichtung für Fahrzeuge bekannt, mit der die Blickrichtung und Position der Augen eines Fahrers erfasst und so eine Information stets in der Blickrichtung des Fahrers angezeigt wird.

Die der Erfindung zugrunde liegende Aufgabe besteht nun darin, ein Verfahren bzw. eine Vorrichtung anzugeben, bei dem/der eine optimale Anpassung der Fahrhinweise an das Bild mit der Fahrzeugumgebung ermöglicht wird.

Diese Aufgabe wird hinsichtlich des Verfahrens durch die Merkmale des Patentanspruchs 1 oder 6 und hinsichtlich der Anordnung durch die Merkmale des Patentanspruchs 7 oder 8 gelöst.

Die weiteren Ansprüche betreffen vorteilhafte Ausgestaltungen des erfindungsgemäßen Verfahrens.

Die Erfindung besteht im Wesentlichen darin, dass bei der Berechnung der perspektivischen Darstellung aus der Sicht des Fahrers die Neigung des Fahrzeuges um seine Längs- und Querachse in Bezug auf die Straßenoberfläche sowie die Neigung der Straße bzw. die Dreidimensionalität des Geländes bei der Bildung eines eingeblendeten Fahrhinweises berücksichtigt werden, um eine bessere Übereinstimmung zwischen dem von der Fahrzeugkamera aufgenommenen Bild der Umgebung im Blickfeld des Fahrers und dem eingeblendeten Fahrhinweises zu ermöglichen.

Durch das erfindungsgemäße Verfahren wird dem Fahrer deutlich und missinterpretationsfrei die Straße angezeigt, in die er einbiegen soll, vergleichbar einer Hand, die auf die vor ihm liegende Straßeneinmündung zeigt. Dazu wird auf einem Display im Sichtbereich des Fahrers ein Videobild der vor ihm liegenden Straßenszene angezeigt. In diesem Bild ist die empfohlene Route, insbesondere die Abbiegestelle durch einen eingeblendeten Fahrhinweis, zum Beispiel einen Pfeil oder einen Linienzug, markiert. Das Videobild wird dabei ständig aktualisiert; die eingeblendete Markierung passt sich ständig der neuen Fahrzeugposition an.

Nachfolgend wird ein Ausführungsbeispiel der Erfindung anhand der Zeichnung näher erläutert. Dabei zeigt

Figur 1     eine Darstellung des Gesamtsystems mit den wesentlichen Eingangs- und Ausgangsgrößen,

Figur 2     ein Übersichtsbild zur Erläuterung der Bildung und Überlagerung des Fahrhinweises,

Figur 3     ein Übersichtsbild zur Erläuterung der Berücksichtigung der Topografie bei der Ermittlung des Fahrhinweises,

Figur 4     eine Darstellung der Fahrzeugkamera mit Winkelangaben,

Figur 5     eine Darstellung zur Erläuterung der Berechnung des Sichtwinkels in der vertikalen, unter dem der Navigationspunkt von der Kamera aus gesehen wird,

Figur 6     eine Darstellung zur Erläuterung einer Berechnungsvereinfachung und

Figur 7     eine Darstellung auf dem Navigationssichtgerät zur Erläuterung der Anpassung der y-Position des Navigationspunktes.

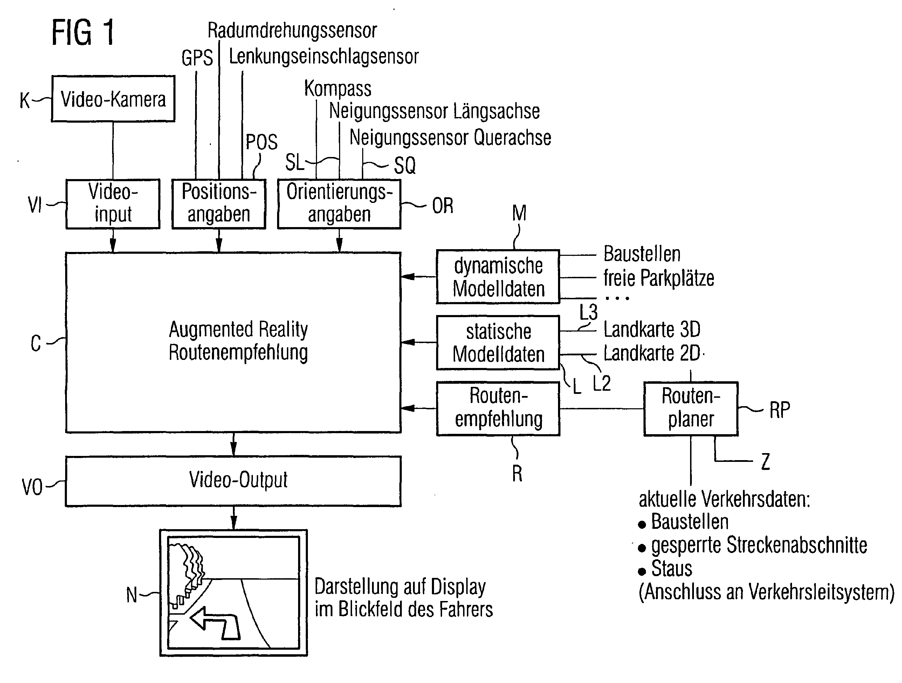

In Figur 1 ist eine prinzipielle Darstellung der erfindungsgemäßen Vorrichtung mit ihren Eingangs- und Ausgangsgrößen gezeigt. In das Gesamtsystem wird ein Fahrtziel Z in einen Routenplaner RP eingegeben, der mit Hilfe einer zweidimensionalen Landkarte L2 und aktuellen Verkehrsdaten eine Routenempfehlung R bildet und einer Berechnungseinheit C zur Verfügung stellt. Die Berechnungseinheit C erhält statische Modelldaten aus der zweidimensionalen Landkarte L2 und einer weiteren dreidimensionalen Landkarte L3 sowie dynamische Modelldaten M, beispielsweise über Baustellen und freie Parkplätze. Eine Fahrzeugkamera K in Form einer Videokamera liefert Videoeingangsdaten VI für die Berechnungseinheit C. Darüber hinaus erhält die Berechnungseinheit C Positionsangaben POS und Orientierungsangaben OR, wobei die Positionsangaben POS, also die realen Positionsdaten durch einen GPS-Empfänger (global positioning system) in zwei Dimensionen erhalten und durch die Landkarte L3 in der dritten Dimension ergänzt oder aber auch direkt in drei Dimensionen erhalten werden. Die Positionsangaben POS können zusätzlich durch Signale eines Radumdrehungssensors und/oder eines Lenkungseinschlagsensors ergänzt sein.

Die Orientierungsangaben werden typischerweise durch einen im Fahrzeug befindlichen Kompass sowie durch einen Neigungssensor SL für die Längsachse und einen Neigungssensor SQ für die Querachse ermittelt. Als Sensoren können bspw. 3D-Gyros eingesetzt werden. Die Berechnungseinheit C liefert Videoausgangsdaten VO für ein Navigationssichtgerät N. Das Navigationssichtgerät N besteht beispielsweise aus einem Bildschirm, der das von der Kamera K aufgenommene Bild der Umgebung im Blickfeld des Fahrers darstellt, das mit dem an das Bild angepassten Fahrhinweis ergänzt ist, wobei der Fahrhinweis mit dem Originalbild in einem beliebigen Verhältnis gemischt wird bzw. eine gewisse Transparenz aufweist oder das Bild an den Stellen des Fahrhinweises vollständig durch den Fahrhinweis selbst ersetzt ist.

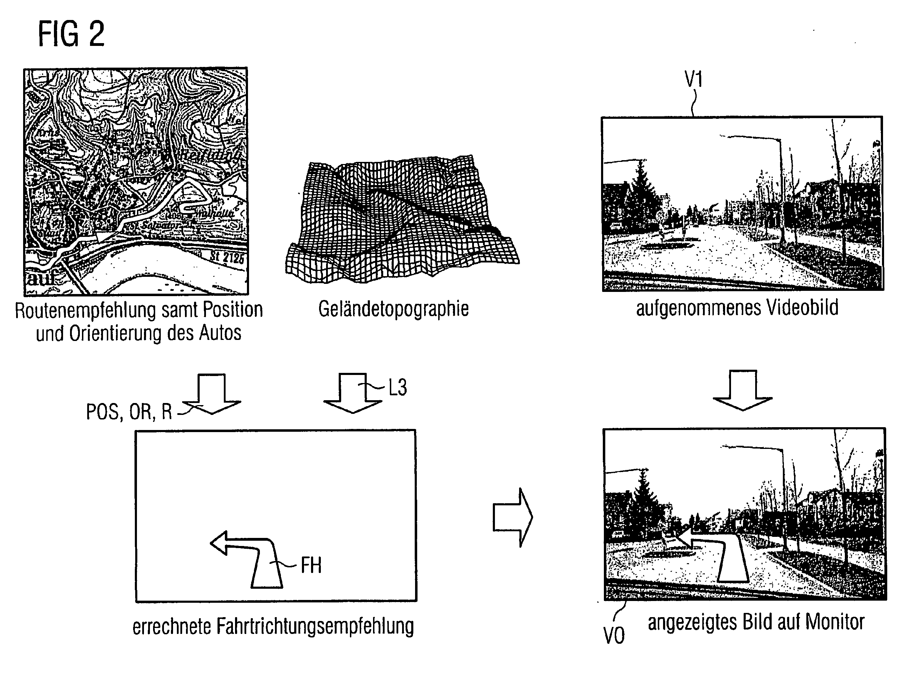

In Figur 2 ist die Bildung des Videoausgangssignals VO in Abhängigkeit des Videoeingangssignals VI der Kamera und eines berechneten Fahrhinweises FH gezeigt. Das Navigationssystem ist mit einer Kamera K ausgestattet, die das Geschehen vor dem Fahrzeug aufnimmt und auf dem Display im Sichtbereich des Fahrers anzeigt. Aus den 3-D-Landkartendaten L3 wird ein 3-D-Geländemodell der aktuellen Umgebung erzeugt. Über die Fahrzeugposition wird die virtuelle Position A des Fahrzeuges und damit die der Kamera K im Geländemodell ermittelt. Über die Orientierung OR bzw. die Fahrtrichtung und die Sensoren SL und SQ bestimmte Neigung des Fahrzeuges in Längs- und Querrichtung wird die virtuelle Richtung der Kamera im Geländemodell errechnet. In das Geländemodell wird die weitere Fahrtroute für den nächsten Streckenabschnitt entsprechend den Informationen des Navigationssystems ein Fahrhinweis vorzugsweise als 3-D-Objekt eingefügt, das vorzugsweise mit Hilfe von Bezier-Kurven gebildet wird. Die Fahrtrichtung wird für die aktuelle Position und Blickrichtung der Kamera "gerendert", das heißt von der 3-D-Welt in eine 2-D-Welt unter Berücksichtigung der Brennweite der realen Kamera perspektivisch projiziert. Dieses so erhaltene Bild wird dem Videobild auf dem Display überlagert und zeigt somit dem Fahrer die weitere Fahrtroute R, und gegebenenfalls entsprechende Zusatzinformationen M in einem Bild der realen Welt. Bei Nacht und Nebel kann die Kamera das Bild der Umgebung im Infrarotbereich aufnehmen und dabei auch die Rolle eines Nachtsichtgeräts übernehmen.

Eine weiteres Ausführungsbeispiel der Erfindung besteht darin, dass die Fahrhinweise direkt in die Frontscheibe des Fahrzeuges selbst projiziert werden. Als Projektionseinrichtung in diesem Sinne eignet sich beispielsweise ein Beamer, der im Fahrzeug installiert ist, aber auch eine Folie hinter der Frontscheibe, zum Beispiel OLEDs (Optical Light Emitting Diode), die an den entsprechenden Stellen die gewünschte Information darstellen und im restlichen Bereich transparent sind.

Da das reale Bild der Umgebung im Blickfeld des Fahrers ja bereits vorhanden ist, kann die Fahrzeugkamera entfallen und es wird über ein Trackingsystem die Position, zum Beispiel Höhe und Abweichung von der Lenkradmitte, und die Blickrichtung der Augen des Fahrers ermittelt. Diese geht zusammen mit der Information über die Position, Orientierung und Neigung des Fahrzeuges in die Berechnung der Position und Orientierung der "virtuellen Kamera", das heißt dem Pendant der Augen, in das Geländemodell ein. Hieraus wird wie beim Ausführungsbeispiel mit Kamera und Display eine zum realen Bild passende Abbildung des Fahrhinweises errechnet und über eine Projektionseinrichtung auf der bzw. in die Frontscheibe abgebildet.

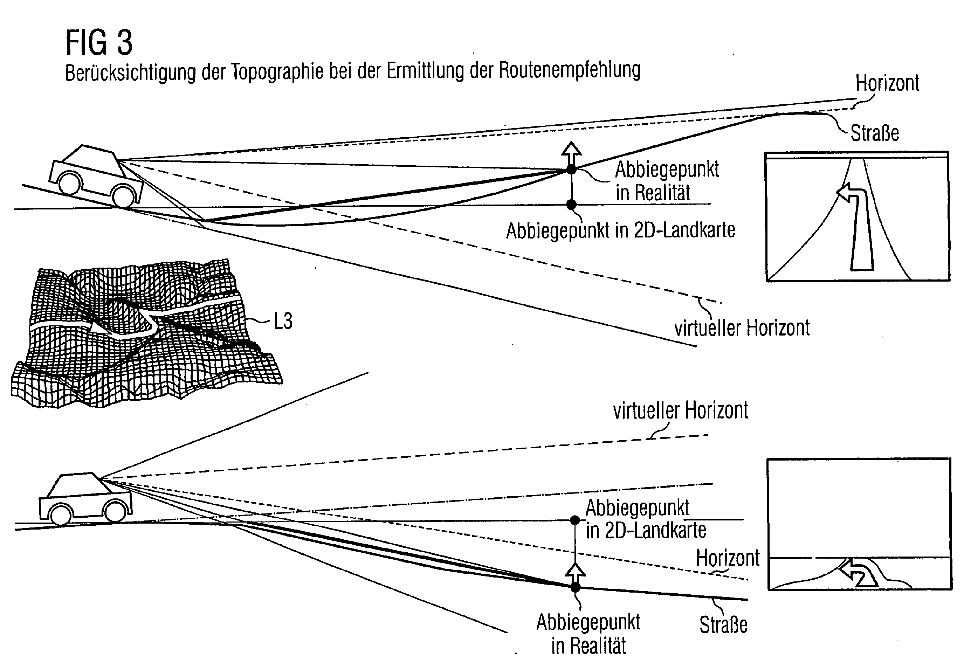

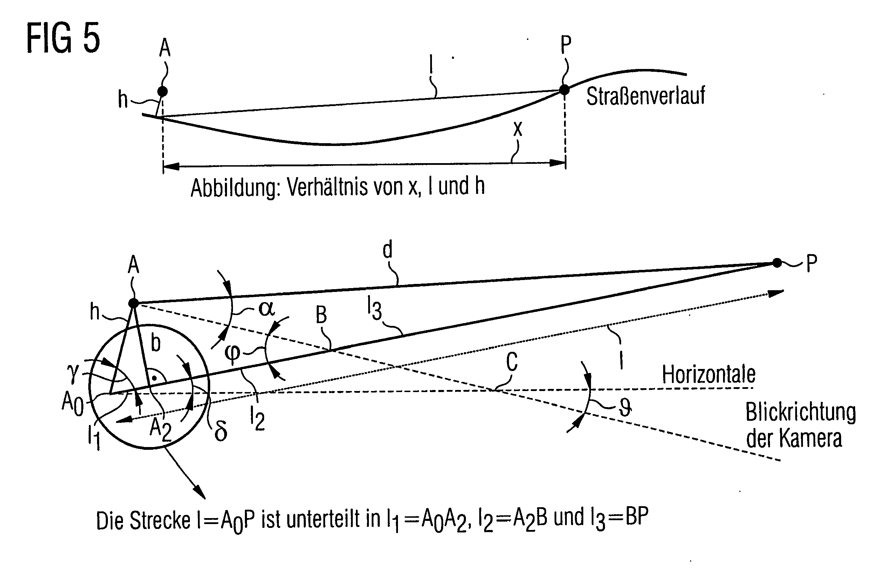

In Figur 3 wird anhand von zwei unterschiedlichen Geländesituationen verdeutlicht, wie die Topografie bei der Ermittlung der Routenempfehlung bzw. des Fahrhinweises bei der Darstellung auf dem Navigationssichtgerät berücksichtigt werden muss. Im ersten Fall befindet sich das Fahrzeug hangabwärts in Richtung eines Talgrundes mit Blick auf einen gegenüberliegenden Hang, was dazu führt, dass sich der Horizont nahezu am oberen Ende der Darstellung auf dem Navigationssichtgerät befindet und ein Navigationspunkt bzw. Abbiegepunkt in einer bestimmten Entfernung vom Fahrzeug folglich auch näher am oberen Rand der Darstellung erscheint als bei Geradeausfahrt. Im unteren Teil der Darstellung von Figur 3 hingegen ist genau die andere Situation gezeigt, bei der das Fahrzeug noch nicht den höchsten Punkt einer Kuppe erreicht hat und der Blick aufwärts gerichtet ist. Hierbei liegt der Horizont näher an der unteren Kante der Darstellung auf dem Navigationssichtgerät und folglich wird der in einer bestimmten Entfernung vom Fahrzeug befindliche Navigationspunkt ebenfalls näher am unteren Ende dargestellt als beispielsweise bei einer Geradeausfahrt in der Ebene oder im ersten Beispiel.

Nachfolgend wird die Berechnung der Position für die einzelnen Punkte einer Navigationsempfehlung bzw. eines Fahrhinweises, insbesondere des Abbiegepunktes, bei der Einbettung in das Videobild unter Berücksichtigung der perspektivischen Verzerrung näher erläutert.

Ziel der folgenden Betrachtung ist es, Navigationspunkte der realen 3D-Welt in einem Videobild zu markieren. Dabei muss für jeden einzelnen Navigationspunkt die Lage des korrespondierenden Punktes (x- und y-Koordinate) in dem von der Kamera aufgenommenen 2D-Bild ermittelt werden. Neben der Brennweite des Kameraobjektivs und dem Anbringungsort der Kamera im Fahrzeug fließen in diese Berechnungen ein:

- für die x-Koordinate:

     die horizontale Richtung von der Kameraposition zum Navigationspunkt
     sowie die Neigung des Fahrzeugs in Querrichtung (z.B. in überhöhten Kurven)

- für die y-Koordinate:

die Entfernung des Navigationspunkts von der Kameraposition,
die Differenz der topographischen Höhe von Navigationspunkt und Kameraposition
sowie die Neigung des Fahrzeugs in Längsrichtung (z.B. bei Steigungen)

Die nachfolgenden Formeln beschreiben der Einfachheit halber nur die Berechnung der y-Koordinate bei der Abbildung eines Navigationspunktes aus der 3D-Welt in das zweidimensionale Videobild.

Seien

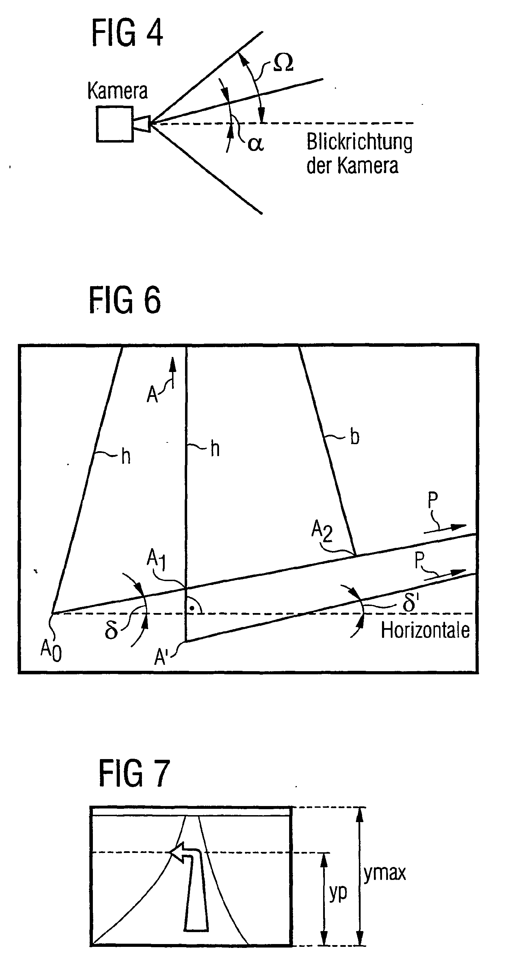

A die in Figur 5 und Figur 6 gezeigte Position der Autokamera K (z.B. in Longitude, Latitude und Höhe über N.N.)

h die in Figur 5 und Figur 6 gezeigte Höhe der Kameraachse über der Straße

P die in Figur 5 und Figur 6 gezeigte Position des betrachteten Navigationspunktes

$\Omega$ der halbe Öffnungswinkel der Fahrzeugkamera, der in Figur 4 dargestellt ist

$\vartheta$ der in Figur 5 gezeigte Neigungswinkel der Kamerablickrichtung zur Horizontalen

$y_{max}$ die Gesamthöhe der Anzeigefläche des Navigationssichtgeräts, die in Figur 7 gezeigt ist.

Die Werte von A ergeben sich aus dem Positionsbestimmungssystem des Fahrzeugs, der Wert von P stammt aus einer 3D-Landkarte. h und $\Omega$ sind fahrzeugspezifische Parameter. $\vartheta$ wird über Sensoren ermittelt.

Gesucht sind

$\alpha$ der Figur 4 und Figur 5 dargestellte Winkel in der Vertikalen, unter dem der Navigationspunkt von der Kamera aus gesehen wird, sowie

$y_P$ die y-Position des Navigationspunktes, gerechnet von der Unterkante, bei seiner Darstellung im Navigationssichtgerät, die in Figur 7 gezeigt ist.

Aus den Werten von A, P und h ergeben sich

x die in Figur 5 gezeigte Entfernung des Navigationspunktes von der Kameraposition in der Horizontalen gemäß einer 2D-Landkarte;

d die in Figur 5 gezeigte Entfernung des Navigationspunktes von der Kameraposition in der 3D-Welt;

1 die in Figur 5 gezeigte Entfernung des Navigationspunktes von dem senkrecht unter der Kameraposition liegenden Punkt auf der Straße unter Berücksichtigung der unterschiedlichen Höhe von Navigationspunkt und Kameraposition;

$\delta'$ der in Figur 6 gezeigte Winkel zwischen der Linie A'P- und der Horizontalen, wobei die Linie A'A eine vom Punkt A ausgehende Senkrechte zur Horizontalen mit der Länge h darstellt;

$\delta$ der in Figur 5 und Figur 6 gezeigte Winkel zwischen 1 und der Horizontalen:
da h<<1 ist, liegt der Unterschied zwischen $\delta$ und $\delta'$ unterhalb der Messgenauigkeit des Positionsbestimmungssystems, d.h. es gilt $\delta \approx \delta'$.

Dann gilt für de Winkel $\alpha$ die folgende Rechnung:

$$\frac{l_3}{\sin\alpha} = \frac{d}{\sin(180 - \varphi)} = \frac{d}{\sin\varphi} \Leftrightarrow \alpha = \arcsin\frac{l_3 \cdot \sin\varphi}{d}$$

$$l_1 + l_2 = \frac{h}{\sin\varphi}$$

$$l_1 = h \cdot \cos\gamma = h \cdot \cos(90 - \varphi) \Leftrightarrow l_1 = h \cdot \sin\varphi$$

$$l_3 = l - (l_1 + l_2) \Leftrightarrow l_3 = l - \frac{h}{\sin\varphi}$$

$$b = h \cdot \sin\gamma = h \cdot \sin(90 - \varphi) = h \cdot \cos\varphi$$

$$d = \sqrt{(l - l_1)^2 + b^2} = \sqrt{(l - h \cdot \sin\varphi)^2 + (h \cdot \cos\varphi)^2}$$

$$\Rightarrow \alpha = \arcsin\left( \frac{l \cdot \sin(\varphi) - h}{\sqrt{(l - h \cdot \sin\varphi)^2 + (h \cdot \cos\varphi)^2}} \right)$$

Aus $\Delta A_0 BC$ folgt $\varphi = \delta + \vartheta$

Da $h \ll 1$ ist, liegt der Unterschied zwischen $\delta$ und $\delta'$ unterhalb der Messgenauigkeit des Positionsbestimmungssystems. Deshalb gilt

$$\varphi \approx \delta' + \vartheta$$

$$\Rightarrow \alpha \approx \arcsin\left( \frac{l \cdot \sin(\delta' + \vartheta) - h}{\sqrt{(l - h \cdot \sin(\delta' + \vartheta))^2 + (h \cdot \cos(\delta' + \vartheta))^2}} \right)$$

Über den Winkel $\alpha$ und den Öffnungswinkel der Kamera $\Omega$ ergibt sich die y-Position $y_P$ des Abbilds des Navigationspunkts im Display unter Berücksichtigung der Geländetopographie und der perspektivischen Verzerrung:

$$\frac{\Omega + \alpha}{2\Omega} = \frac{y_P}{y_{max}} \Rightarrow y_P = \frac{(\Omega + \alpha) \cdot y_{max}}{2\Omega}$$

Optional werden weitere Informationen über die Fahrstrecke und das Fahrziel im Navigationsbild, zum Teil unter Berücksichtigung der aktuellen Witterungsverhältnisse und dynamischen Verkehrsdaten, mit direktem Bezug auf Positionen im dargestellten Gelände angezeigt:

- Die zulässige Höchstgeschwindigkeit an der aktuellen Position;
- Bremspunkte bzw. empfohlene Geschwindigkeit vor Kurven oder Abzweigungen;
- der weitere Streckenverlauf hinter Brücken, Kuppen, nach Unterführungen usw.;

- Straßennamen, wichtige Verkehrszeichen;
- Hinweise auf freie Plätze oder auf aktuelle Baustellen und Staus;
- Hinweise auf Geschäfte oder Sehenswürdigkeiten und vieles mehr.

Diese zusätzlichen Informationen können dabei durch eine entsprechende Positionierung und/oder eine Vergrößerung oder Verkleinerung des hierfür vorgesehenen Symbols oder aber beispielsweise durch Kippen des Schriftzuges parallel zum Horizont angepasst werden.

**Patentansprüche**

1. Verfahren zur Darstellung eines Fahrhinweises (FH), insbesondere in Auto-Navigationssystemen,

   - bei dem die Umgebung eines Fahrzeugs im Blickfeld eines Fahrers von einer Fahrzeugkamera (K) aufgezeichnet und mit einem vom Fahrziel (Z) und von der aktuellen Position des Fahrzeugs abhängigen Fahrhinweis in einem Navigationssichtgerät (N) ergänzt wird,
   - bei dem die aktuelle geografische Position A der Fahrzeugkamera in drei Dimensionen, eine aktuelle Orientierung der Fahrzeugkamera in der Horizontalebene und ein aktueller Neigungswinkel $\vartheta$ der Kamerablickrichtung zur Horizontalen ermittelt wird,
   - bei dem eine jeweilige Position eines Navigationspunktes (P) zur Bildung des Fahrhinweises aus einer dreidimensionalen Karte (L3) entnommen wird,
   - bei dem mindestens ein Sichtwinkel a in der Vertikalen, unter dem der Navigationspunkt von der Fahrzeugkamera gesehen wird, in Abhängigkeit des aktuellen Neigungswinkels ($\vartheta$) errechnet wird und
   - bei dem der Fahrhinweis in Abhängigkeit des mindestens einen Sichtwinkels mindestens in der vertikalen Dimension ($y_P$) in seiner Darstellung im Navigationssichtgerät (N) angepasst wird.

2. Verfahren nach Anspruch 1, bei dem der mindestens eine Sichtwinkel $\alpha$ durch die Formel

$$\alpha = \arcsin\left(\frac{l \cdot \sin(\delta'+\vartheta) - h}{\sqrt{(l - h \cdot \sin(\delta'+\vartheta))^2 + (h \cdot \cos(\delta'+\vartheta))^2}}\right)$$

berechnet wird, wobei

   l für die Entfernung des Navigationspunktes P von dem Punkt, der sich als Schnittpunkt zwischen der Normalen von Straßenoberfläche zur Fahrzeugkamera und der Straßenoberfläche selbst ergibt,
   h die Höhe der Kameraachse über der Straße,
   $\vartheta$ der Neigungswinkel der Kamerablickrichtung zur Horizontalen und
   $\delta'$ der Winkel zwischen einer Linie A'P und der Horizontalen ist, wobei die Linie A'A eine vom Punkt A ausgehende Senkrechte zur Horizontalen mit der Länge h darstellt.

3. Verfahren nach Anspruch 2,
   bei dem die vertikale Position yp des Navigationspunkts gerechnet von der Unterkante, für seine Darstellung im Navigationssichtgerät durch die Formel

$$y_P = \frac{(\Omega + \alpha) \cdot y_{max}}{2\Omega}$$

berechnet wird, wobei $\Omega$ der halbe Öffnungswinkel der Fahrzeugkamera und $y_{max}$ die Gesamthöhe der Anzeigefläche des Navigationssichtgerätes ist.

4. Verfahren nach einem der vorhergehenden Ansprüche,
   bei dem mindestens ein zusätzlicher Hinweis (R, M) auf dem Navigationssichtgerät in Abhängigkeit mindestens eines Sichtwinkels in seiner Darstellung verändert wird.

5.  Verfahren nach einem der Ansprüche 1 bis 4,
    bei dem das Navigationssichtgerät aus einem Bildschirm besteht und das von der Kamera aufgezeichnete Bild mit dem Fahrhinweis im Bereich des Fahrhinweises mindestens teilweise überblendet wird.

6.  Verfahren zur Darstellung eines Fahrhinweises (FH), insbesondere in Auto-Navigationssystemen,

    - bei dem die aktuelle geografische Position A der Augen des Fahrers in drei Dimensionen durch ein Tracking-System und eine aktuelle Position des Fahrzeugs und und ein aktueller Neigungswinkel $\vartheta$ der Fahrzeuglängsachse zur Horizontalen ermittelt werden, um das aktuelle Blickfeld eines Fahrers zu erfassen,
    - bei dem abhängig von einem Fahrziel (Z) eine jeweilige Position eines Navigationspunktes (P) zur Bildung des Fahrhinweises aus einer dreidimensionalen Karte (L3) entnommen wird,
    - bei dem mindestens ein Sichtwinkel $\alpha$ in der Vertikalen, unter dem der Navigationspunkt von den Augen des Fahrers gesehen wird, in Abhängigkeit des aktuellen Neigungswinkels ($\vartheta$) errechnet wird und
    - bei dem der Fahrhinweis in Abhängigkeit des Sichtwinkels mindestens in der vertikalen Dimension ($y_P$) in seiner Darstellung auf/in die Frontscheibe des Fahrzeuges dem jeweiligen Blickfeld des Fahrers angepasst wird.

7.  Vorrichtung zur Darstellung eines Fahrhinweises insbesondere in einem Auto-Navigationssystem,

    - bei der eine Fahrzeugkamera zur Aufzeichnung der Umgebung im Blickfeld eines Fahrers vorhanden ist,
    - bei der eine Einrichtung zur dreidimensionalen Erfassung der Position des Fahrzeugs bzw. der Fahrzeugkamera und seiner bzw. ihrer Orientierung in der Horizontalebene vorhanden ist,
    - bei der mindestens ein Sensor ($S_L$,$S_Q$) vorhanden ist, der mindestens einen Neigungswinkel ($\vartheta$) der Kamerablickrichtung zur Horizontalen erfasst,
    - bei der eine Einrichtung (L) zur Abfrage einer dreidimensionalen Karte vorhanden ist, mit deren Hilfe eine dreidimensionale Position eines jeweiligen Navigationspunktes (P) ermittelt wird,
    - bei der eine Einrichtung zur Berechnung mindestens eines Sichtwinkels ($\alpha$) in der Vertikalen, unter dem der Navigationspunkt von der Fahrzeugkamera gesehen wird, derart vorhanden ist, dass der Sichtwinkel in Abhängigkeit des Neigungswinkels ($\vartheta$) der Kamerablickrichtung berechenbar ist, und
    - bei der ein Navigationssichtgerät (N) vorhanden ist, bei dem ein Fahrhinweis in Abhängigkeit des mindestens einen Sichtwinkels mindestens in der vertikalen Dimension in seiner Darstellung im Navigationssichtgerät (N) angepasst wird.

8.  Vorrichtung zur Darstellung eines Fahrhinweises insbesondere in einem Auto-Navigationssystem,

    - bei der eine Einrichtung zur dreidimensionalen Erfassung der Position des Fahrzeugs und seiner Orientierung in der Horizontalebene vorhanden ist,
    - bei der ein Tracking-System zur dreidimensionalen Erfassung der Position der Augen relativ zum Fahrzeug vorhanden ist,
    - bei der mindestens ein Sensor ($S_L$, $S_Q$) vorhanden ist, der mindestens einen Neigungswinkel ($\vartheta$) der Fahrzeuglängsachse zur Horizontalen erfasst,
    - bei der eine Einrichtung (L) zur Abfrage einer dreidimensionalen Karte vorhanden ist, mit deren Hilfe eine dreidimensionale Position eines vom Fahrziel (Z) abhängigen jeweiligen Navigationspunktes (P) ermittelt wird,
    - bei der eine Einrichtung zur Berechnung mindestens eines Sichtwinkels ($\alpha$) in der Vertikalen, unter dem der Navigationspunkt vom Fahrer gesehen wird, derart vorhanden ist, dass der Sichtwinkel in Abhängigkeit des Neigungswinkels ($\vartheta$) der Kamerablickrichtung berechenbar ist,
    - bei der ein Navigationssichtgerät (N) derart vorhanden ist, dass der Fahrhinweis in Abhängigkeit des mindestens einen Sichtwinkels mindestens in der vertikalen Dimension dem Blickfeld des Fahrers angepasst in/auf der Frontscheibe dargestellt wird.

### Claims

1.  Method for displaying driving instructions (FH), in particular in a car navigation system,

    - wherein the surroundings of a vehicle are recorded in the field of vision of a driver by a vehicle camera (K) and augmented by driving instructions on a navigation display unit (N) as a function of the destination (Z) and the current position of the vehicle,
- wherein the current geographical position A of the vehicle camera is determined in three dimensions, the current orientation of the vehicle camera is determined in the horizontal plane and the current angle of inclination $\vartheta$ of the camera viewing direction relative to the horizontal is determined,
- wherein a particular position of a navigation point (P) is derived from a three-dimensional map (L3) to generate driving instructions,
- wherein at least one viewing angle $\alpha$ is calculated in the vertical at which the navigation point is viewed from the vehicle camera as a function of the current angle of inclination ($\vartheta$) and
- wherein the driving instructions are adjusted as a function of the at least one viewing angle at least in the vertical dimension ($y_P$) in its display on the navigation display unit (N).

2. Method according to Claim 1, wherein the at least one viewing angle $\alpha$ is calculated using the formula

$$\alpha = \arcsin\left( \frac{l \cdot \sin(\delta'+\vartheta) - h}{\sqrt{(l - h \cdot \sin(\delta'+\vartheta))^2 + (h \cdot \cos(\delta'+\vartheta))^2}} \right)$$

whereby

l is the distance of the navigation point P from the point resulting as the point of intersection between the normals of road surface to vehicle camera and the road surface itself,
h is the height of the camera axis above the road,
$\vartheta$ is the angle of inclination of the camera viewing direction relative to the horizontal, and
$\delta'$ is the angle between a line A'P and the horizontal, whereby the line A'A represents a perpendicular to the horizontal of length h starting from point A.

3. Method according to Claim 2,
wherein the vertical position $y_p$ of the navigation point calculated from the lower edge is calculated for its display on the navigation display unit by the formula

$$y_P = \frac{(\Omega + \alpha) \cdot y_{max}}{2\Omega}$$

whereby $\Omega$ is half the aperture angle of the vehicle camera and $y_{max}$ is the overall height of the display area of the navigation display unit.

4. Method according to one of the preceding Claims,
wherein the display of at least one additional instruction (R, M) on the navigation display unit is modified as a function of at least one viewing angle.

5. Method according to one of Claims 1 to 4,
wherein the navigation display unit comprises a screen and the image recorded by the camera is at least partially overlaid by the driving instructions in the area where the driving instructions occur.

6. Method for displaying driving instructions (FH), in particular in car navigation systems

- wherein the current geographical position A of the eyes of the driver is determined in three dimensions by a tracking system and the current position of the vehicle and the current angle of inclination $\vartheta$ of the longitudinal axis of the vehicle relative to the horizontal are determined in order to establish the current field of vision of the driver,
- wherein the particular position of a navigation point (P) is derived as a function of a destination (Z) from a three-dimensional map (L3) to generate driving instructions,

- wherein at least one viewing angle $\alpha$ in the vertical at which the navigation point is viewed from the eyes of the driver, based on the current angle of inclination ($\vartheta$) is calculated, and
- wherein the driving instructions are adjusted to the relative field of vision of the driver as a function of the viewing angle at least in the vertical dimension ($y_p$) in their display on/in the windshield of the vehicle.

**7.** Device for displaying driving instructions, in particular in a car navigation system,

- wherein a vehicle camera is present to record the surroundings in the field of vision of the driver,
- wherein a device is present enabling three-dimensional recording of the position of the vehicle or the vehicle camera and its orientation in the horizontal plane,
- wherein at least one sensor ($S_L$, $S_Q$) is present which detects at least one angle of inclination ($\vartheta$) of the camera viewing direction relative to the horizontal,
- wherein a device (L) is present for scanning a three-dimensional map which is used to determine a three-dimensional position of a particular navigation point,
- wherein a device is present for calculating at least one viewing angle ($\alpha$) in the vertical at which the navigation point is viewed from the vehicle camera in such a way that the viewing angle can be calculated as a function of the angle of inclination ($\vartheta$) of the camera viewing direction, and
- wherein a navigation display unit (N) is present with which the display of driving instructions on the navigation display unit is adjusted as a function of the at least one viewing angle at least in the vertical dimension.

**8.** Device for displaying driving instructions, in particular in a car navigation system,

- wherein a device is present for the three-dimensional detection of the position of the vehicle and its orientation in the horizontal plane,
- wherein a tracking system is present for the three-dimensional detection of the position of the eyes relative to the vehicle,
- wherein at least one sensor ($S_L$, $S_Q$) is present that detects at least one angle of inclination ($\vartheta$) of the longitudinal axis of the vehicle relative to the horizontal,
- wherein a device (L) is present to scan a three-dimensional map which is used to determine the three-dimensional position of a particular navigation point (P) as a function of the destination (Z),
- wherein a device is present to calculate at least one viewing angle ($\alpha$) in the vertical at which the navigation point is viewed by the driver in such a way that the viewing angle can be calculated as a function of the angle of inclination ($\vartheta$) of the camera viewing direction,
- wherein a navigation display unit (N) is present in such a way that the driving instructions are displayed in/on the windshield, having been adjusted as a function of the at least one viewing angle at least in the vertical dimension to the field of vision of the driver.

**Revendications**

**1.** Procédé de présentation d'une instruction de conduite (FH), en particulier dans des systèmes de navigation automobile,

- dans lequel l'environnement d'un véhicule est présenté dans le champ de vision d'un conducteur par une caméra (K) du véhicule et complété par une instruction de conduite qui dépend de la destination (Z) et de la position actuelle du véhicule dans un appareil de visualisation de navigation (N),
- dans lequel la position géographique actuelle A de la caméra du véhicule est déterminée dans trois dimensions, une orientation actuelle de la caméra du véhicule est déterminée dans le plan horizontal et un angle d'inclinaison actuel $\vartheta$ de la direction de visée de la caméra par rapport à l'horizontale,
- dans lequel une position respective d'un point de navigation (P) est prise dans une carte en trois dimensions (L3) pour la formation de l'instruction de conduite,
- dans lequel au moins un angle de visée $\alpha$ dans le plan vertical sous lequel le point de navigation est vu par la caméra du véhicule est calculé en fonction de l'angle d'inclinaison actuel ($\vartheta$) et
- dans lequel l'instruction de conduite est adaptée dans sa présentation dans l'appareil de visualisation de navigation (N) en fonction de l'au moins un angle de visée, au moins dans la direction verticale ($y_p$).

**2.** Procédé selon la revendication 1, dans lequel l'au moins un angle de visée $\alpha$
est calculé par la formule

$$\alpha = \arcsin\left( \frac{l.\sin(\delta'+\vartheta) - h}{\sqrt{(l - h.\sin(\delta'+\vartheta))^2 + (h.\cos(\delta'+\vartheta))^2}} \right)$$

où,

l représente la distance du point de navigation P vu du point qui est donné par le point d'intersection entre la normale à la surface de la chaussée qui passe par la caméra du véhicule et la surface de la chaussée elle-même,
h représente la hauteur de l'axe de la caméra au-dessus de la chaussée,
$\vartheta$ représente l'angle d'inclinaison de la direction de visée de la caméra par rapport à l'horizontale, et
$\delta'$ représente l'angle entre une ligne A'P et l'horizontale, où la ligne A'A représente une perpendiculaire, de longueur h, abaissée du point A sur l'horizontale.

3. Procédé selon la revendication 2,
dans lequel la position verticale $y_P$ du point de navigation, comptée à partir du bord inférieur, est calculée pour sa représentation dans l'appareil de vision de navigation par la formule

$$y_P = \frac{(\Omega+\alpha).y_{max}}{2\Omega}$$

où $\Omega$ est le demi-angle d'ouverture de la caméra du véhicule et $y_{max}$ la hauteur totale de la surface d'affichage de l'appareil de vision de navigation.

4. Procédé selon une des revendications précédentes,
dans lequel au moins une instruction supplémentaire (R, M) est modifiée dans sa représentation sur l'appareil de visualisation de navigation en fonction d'au moins un angle de visée.

5. Procédé selon une des revendications 1 à 4,
dans lequel l'appareil de visualisation de navigation est composé d'un écran et l'image présentée par la caméra est affichée à l'écran au moins partiellement par l'instruction de conduite dans la région de l'instruction de conduite.

6. Procédé pour la présentation d'une instruction de conduite (FH), en particulier dans un système de navigation automobile,

- dans lequel la position géographique actuelle des yeux du conducteur dans trois dimensions est déterminée par un système de poursuite et une position actuelle du véhicule et un angle d'inclinaison $\vartheta$ de l'axe longitudinal du véhicule par rapport à l'horizontale sont déterminés pour capter le champ de vision actuel d'un conducteur,
- dans lequel, en fonction d'une destination (Z), une position respective d'un point de navigation (P) est prise dans une carte tridimensionnelle (L3) pour la formation d'une instruction de conduite,
- dans lequel au moins un angle de visée $\alpha$ dans le plan vertical sous lequel le point de navigation est vu des yeux du conducteur est calculé en fonction de l'angle d'inclinaison actuel ($\vartheta$), et
- dans lequel l'instruction de conduite est adaptée au champ de vision du conducteur dans sa représentation sur ou dans le pare-brise du véhicule en fonction de l'angle de visée, au moins dans la direction verticale ($y_P$).

7. Dispositif pour la présentation d'une instruction de conduite, en particulier dans un système de navigation automobile,

- dans lequel une caméra de véhicule est prévue pour présenter l'environnement dans le champ de visée d'un conducteur,
- dans lequel est prévu un dispositif pour la saisie tridimensionnelle de la position du véhicule ou de la caméra du véhicule ainsi que de son orientation dans le plan horizontal,
- dans lequel il est prévu au moins un capteur ($S_L$, $S_Q$) qui capte au moins un angle d'inclinaison ($\vartheta$) de la direction de visée de la caméra par rapport à l'horizontale, dans lequel est prévu un dispositif (L) destiné à interroger une carte en trois dimensions et à l'aide duquel une position tridimensionnelle d'un point de navigation (P) respectif est déterminée,

- dans lequel est prévu un dispositif pour le calcul d'au moins un angle de visée (α) dans le plan vertical sous lequel le point de navigation est vu par la caméra du véhicule, de telle sorte que l'angle de visée peut être calculé en fonction de l'angle d'inclinaison (ϑ) de la direction de visée de la caméra, et

- dans lequel il est prévu un appareil de visualisation de navigation (N) dans lequel une instruction de conduite est adaptée dans sa présentation dans l'appareil de vision de navigation (N), au moins dans la direction verticale, en fonction de l'au moins un angle de visée.

8. Dispositif pour la présentation d'une instruction de conduite, en particulier
dans un système de navigation automobile,

- dans lequel il est prévu un dispositif pour la détection tridimensionnelle de la position du véhicule et de son orientation dans le plan horizontal,

- dans lequel il est prévu un système de poursuite pour la détection tridimensionnelle de la position des yeux par rapport au véhicule,

- dans lequel il est prévu au moins un capteur ($S_L$, $S_Q$) qui détecte au moins un angle d'inclinaison (ϑ) de l'axe longitudinal du véhicule par rapport à l'horizontale,

- dans lequel il est prévu un dispositif (L) destiné à interroger une carte en trois dimensions et à l'aide duquel une position tridimensionnelle d'un point de navigation (P) respectif fonction de la destination (Z) est déterminée,

- dans lequel il est prévu un dispositif pour le calcul d'au moins un angle de visée (α) dans le plan vertical sous lequel le point de navigation est vu par le conducteur de telle sorte que l'angle de visée peut être calculé en fonction de l'angle d'inclinaison (ϑ) de la direction de visée de la caméra, et

- dans lequel il est prévu un appareil de visualisation de navigation (N) de telle manière que l'instruction de conduite soit adaptée au champ de visée du conducteur, au moins dans la direction verticale, en fonction de l'au moins un angle de visée et présenté dans ou sur le pare-brise.

**FIG 1**

Radumdrehungssensor

GPS | Lenkungseinschlagsensor

K—⌐ Video-Kamera

Kompass
Neigungssensor Längsachse
Neigungssensor Querachse

POS    SL—⌐    ⌐—SQ

VI—⌐ | Video-input | | Positions-angaben | | Orientierungs-angaben | —OR

M

dynamische Modelldaten —— Baustellen
—— freie Parkplätze
· · ·

C—⌐ | Augmented Reality Routenempfehlung

L3
statische Modelldaten —⌐ Landkarte 3D
—⌐ Landkarte 2D·

L  L2

Routen-empfehlung | | Routen-planer | —RP

VO—⌐ | Video-Output

R

Z

aktuelle Verkehrsdaten:
• Baustellen
• gesperrte Streckenabschnitte
• Staus
(Anschluss an Verkehrsleitsystem)

N—⌐

Darstellung auf Display
im Blickfeld des Fahrers

EP 1 415 128 B1

# FIG 2

Routenempfehlung samt Position
und Orientierung des Autos

Geländetopographie

V1

aufgenommenes Videobild

POS, OR, R

L3

FH

errechnete Fahrtrichtungsempfehlung

VO angezeigtes Bild auf Monitor

EP 1 415 128 B1

# FIG 3

Berücksichtigung der Topographie bei der Ermittlung der Routenempfehlung

Horizont

Straße

Abbiegepunkt
in Realität

Abbiegepunkt in 2D-Landkarte

L3

virtueller Horizont

virtueller Horizont

Abbiegepunkt
in 2D-Landkarte

Horizont

Abbiegepunkt
in Realität

Straße

EP 1 415 128 B1

FIG 5

Straßenverlauf

Abbildung: Verhältnis von x, l und h

Blickrichtung der Kamera

Horizontal: Horizontale

Die Strecke $l = A_0P$ ist unterteilt in $l_1 = A_0A_2$, $l_2 = A_2B$ und $l_3 = BP$

## FIG 4

Kamera

$\Omega$

$\alpha$

Blickrichtung
der Kamera

## FIG 6

A

h

h

b

P

$A_2$

P

$A_1$

$\delta'$

$\delta$

$A_0$

A'

Horizontale

## FIG 7

ymax

yp